# FASCICULE DE BREVET EUROPEEN

(11) **EP 3 219 157 B1**
(45) Date de publication et mention de la délivrance du brevet: **31.10.2018**
(21) Numéro de dépôt: 15804891.8
(22) Date de dépôt: 10.11.2015
(51) Int. Cl.: H04W 4/14, H04W 60/00, H04W 4/60, H04W 88/06, H04L 29/08

(54) **CARTE EUICC STOCKANT DES NUMÉROS COURTS PAR PROFIL D'ABONNÉ POUR NOTIFIER UN SERVEUR DE GESTION D'ABONNEMENT**
EUICC-KARTE ZUR SPEICHERUNG KURZER NUMMERN PRO TEILNEHMERPROFIL ZUR BENACHRICHTIGUNG EINES TEILNAHMEVERWALTUNGSSERVERS
EUICC CARD STORING SHORT NUMBERS PER SUBSCRIBER PROFILE TO NOTIFY A SUBSCRIPTION MANAGEMENT SERVER

(30) Priorité: 14.11.2014 FR 1461031
(43) Date de publication de la demande: 20.09.2017
(73) Titulaire: IDEMIA France, 92700 Colombes (FR)
(72) Inventeur: LARIGNON, Guillaume, 92700 Colombes (FR); DUMOULIN, Jérôme, 92700 Colombes (FR)
(74) Mandataire: Santarelli
(86) Numéro de dépôt international: PCT/FR2015/053046
(87) Numéro de publication internationale: WO 2016/075407

(56) Documents cités:
- EP-A1- 1 901 192
- EP-A1- 2 680 628
- EP-A1- 2 793 496
- V1 ET AL: "GSM Association Non-confidential Official Document 12FAST.15 -Remote Provisioning Architecture for Embedded UICC Technical Specification Remote Provisioning Architecture for Embedded UICC Technical Specification Security Classification: Non-confidential GSM Association Non-confidential Official Docu", , 17 décembre 2013 (2013-12-17), XP055164432, Extrait de l'Internet: URL:http://www.gsma.com/connectedliving/wp -content/uploads/2014/01/2.-GSMA-Remote-Pr ovisioning-Architecture-for-Embedded-UICC- Technical-Specification-Version-1.0.pdf [extrait le 2015-01-23]
- "Reprogrammable SIMs: Technology, Evolution and Implications Final Report", , 25 septembre 2012 (2012-09-25), pages 1-95, XP055126567, Extrait de l'Internet: URL:http://stakeholders.ofcom.org.uk/binar ies/research/telecoms-research/reprogramma ble-sims.pdf [extrait le 2014-07-02]

## Description

### DOMAINE DE L'INVENTION

L'invention concerne de façon générale les communications dans un réseau de téléphonie mobile, et notamment les notifications d'état de cartes sécurisées, ou tout autre élément sécurisé, à une unité de routage sécurisé d'un serveur distant de gestion d'abonnement, connue sous le sigle SM-SR.

La présente invention est plus particulièrement dirigée vers un élément sécurisé, par exemple une carte eUICC, vers un système d'infrastructure de réseau de téléphonie mobile et vers un procédé de communication dans un réseau de téléphonie mobile.

Ces différents éléments peuvent notamment mettre en oeuvre un service de minimessages, type SMS (pour Short Message Service), pour véhiculer les notifications d'état des éléments sécurisés d'abonné.

### CONTEXTE DE L'INVENTION

Une carte UICC (pour « *Universal Integrated Circuit Card* », soit carte de circuit intégré universelle) classique, telle qu'une carte SIM, est un élément sécurisé de téléphonie mobile défini dans la norme ETSI TS 102 221 [102 221]. Elle est personnalisée par un opérateur de téléphonie avant d'être utilisée par un abonné. Les cartes eUICC (pour « *embedded UICC* »), ou plus généralement les éléments sécurisés embarqués eSE (pour « *embedded Secure Element* »), sont embarqués dans des terminaux de téléphonie mobile et peuvent contenir plusieurs personnalisations, appelées profils, éventuellement pour des opérateurs différents.

Les propriétaires de l'eUICC ou eSE peuvent gérer à distance les eUICC ou eSE de leurs abonnés grâce à une unité de routage sécurisé d'un serveur de gestion d'abonnement (« *Subscription Manager-Secure Routing* », également connu sous le sigle SM-SR, et appelé par la suite serveur SM-SR) prévu dans l'infrastructure du réseau mobile. Cette gestion à distance permet par exemple de charger des données dans la carte ou de l'élément, ou d'assurer le changement de réseau mobile, et donc d'opérateur de téléphonie mobile.

Le document EP 2 680 628 décrit par exemple un procédé pour charger à distance de nouveaux profils dans une eUICC.

Selon la norme GSMA 12FAST.15 en cours d'établissement, cette gestion à distance requiert que l'eUICC ou eSE envoie des notifications au serveur SM-SR. Ces notifications peuvent être envoyées par SMS (pour « *Short Message Service* »), par HTTPs (pour « *HyperText Transfer Protocol Secure* », plus rapide) ou éventuellement par CAT-TP (plus rapide).

A titre d'exemple, ces notifications peuvent confirmer que le terminal s'est attaché au réseau mobile, ou indiquer qu'à raison d'une perte de couverture, l'eUICC ou eSE a basculé sur un autre profil que le profil courant, par exemple sur un profil par défaut.

Selon cette norme, un profil abonné dans une eUICC ou un eSE est la combinaison d'une structure de fichiers, de données et d'applications qui permettent à l'eUICC ou eSE, lorsque ces éléments sont présents, d'accéder à une infrastructure de réseau mobile particulière, notamment celle d'un opérateur de téléphonie mobile. Un profil abonné est ainsi spécifique à un opérateur de téléphonie mobile dans la mesure où il autorise l'accès uniquement à l'infrastructure particulière correspondante. A titre d'exemple, le profil peut inclure des informations sur les entités de l'infrastructure à contacter, des clés de connexion, etc. Par exemple, une eUICC ou un eSE peut disposer de deux profils associés à deux opérateurs mobiles différents, permettant l'accès à des infrastructures différentes. Ces profils sont gérés par le domaine racine de sécurité émetteur (ISD-R pour « *Issuer Security Domain* - *Root* » selon la norme GlobalPlatform) de la carte, lui-même contrôlé par l'opérateur mobile (l'émetteur ou *Issuer*).

Pour envoyer une notification telle qu'évoquée ci-dessus, l'eUICC ou eSE doit notamment récupérer des données de statut collectées sur le profil courant, des paramètres de connexion ainsi qu'une adresse destinataire de la notification, c'est-à-dire l'adresse du serveur SM-SR qui collecte ces informations. Dans le cas d'une notification par SMS, l'adresse du serveur SM-SR est un numéro de téléphone international unique, c'est-à-dire composé d'un code pays permettant un accès mondial au serveur SM-SR (du type +44 pour le Royaume Uni) et d'un numéro de téléphone dans ce pays.

Selon toujours la même norme, l'adresse du serveur SM-SR est mémorisée dans l'eUICC ou eSE par le propriétaire du serveur SM-SR à l'aide d'une commande particulière émise par le serveur SM-SR aux cartes eUICC ou éléments eSE des abonnés. Cette commande, nommément « *UpdateSMSRAdressingParameters* » et définie à la section 4.1.1.10 de la version actuelle de la norme, est envoyée à l'ISD-R de l'eUICC ou eSE permettant le cas échéant de mettre à jour ladite adresse du serveur SM-SR.

Selon la norme dans sa mouture actuelle, le serveur SM-SR devrait avoir une adresse (numéro de téléphone international unique) unique pour tous les profils et donc, accessible depuis tous les opérateurs mobiles.

Toutefois, cette situation de la norme n'est pas satisfaisante.

D'une part, il est relativement difficile d'utiliser un numéro de téléphone international unique pour tous les opérateurs de tous les pays. En effet, dans certains cas, les réseaux filtrent les SMS binaires en provenance des terminaux (SMS MO). Une solution dans ce cas est de connecter le SM-SR au serveur de service de minimessages (SMS-C) de chaque opérateur. Toutefois, l'accès au SM-SR ne se fait alors plus à l'aide d'un numéro de téléphone unique.

D'autre part, une difficulté survient lorsque le serveur SM-SR est changé et qu'ainsi une nouvelle adresse est attribuée. La mise à jour des eUICCs ou eSEs constitue alors une charge de travail importante pour le nouveau serveur SM-SR, compte tenu du grand nombre d'abonnés impactés par ce changement.

Enfin, l'utilisation d'une telle adresse de type numéro de téléphone international unique ne permet pas d'effectuer aisément des traitements des notifications en fonction des opérateurs. En outre, elle ne garantit pas une confidentialité des notifications de service qu'un opérateur peut déclencher sur les eUICCs ou eSEs de ses abonnés, car tous les opérateurs peuvent manipuler les messages destinés à une adresse universelle.

Dans ce contexte, la présente invention vise à résoudre tout ou partie de ces inconvénients.

### RESUME DE L'INVENTION

L'invention est définie par les revendications. Un exemple prévoit notamment un élément sécurisé, par exemple une carte sécurisée, de connexion à un réseau de téléphonie mobile, comprenant, en mémoire locale, au moins un identifiant d'adresse, par exemple un numéro court (ou « *short code* »), propre à un opérateur de téléphonie mobile, ledit identifiant d'adresse étant associé à un profil d'abonné à l'opérateur au sein de l'élément sécurisé, et l'élément sécurisé est configuré pour récupérer, de la mémoire locale, un identifiant d'adresse, par exemple un numéro court, une adresse IP ou encore une adresse URL associé à un profil d'abonné en cours d'utilisation et pour envoyer, à l'aide dudit identifiant récupéré, une notification d'état d'élément sécurisé à un serveur distant de gestion d'abonnement (SM-SR) dans une infrastructure de téléphonie mobile.

Corrélativement, un exemple prévoit un procédé de communication dans un réseau de téléphonie mobile à l'aide d'un élément sécurisé, par exemple une carte sécurisée, de connexion au réseau de téléphonie mobile, l'élément sécurisé comprenant, en mémoire locale, au moins un identifiant d'adresse, par exemple un numéro court, propre à un opérateur de téléphonie mobile et associé à un profil d'abonné à l'opérateur, le procédé, comprenant, à réception d'un événement déclencheur de notification, les étapes suivantes :
récupérer, de la mémoire locale, un identifiant d'adresse, par exemple un numéro court, associé à un profil d'abonné en cours d'utilisation, et
envoyer, à l'aide de l'identifiant récupéré, une notification d'état d'élément sécurisé à un serveur distant de gestion d'abonnement (SM-SR) dans une infrastructure de téléphonie mobile.

Un exemple prévoit également un système d'infrastructure de réseau de téléphonie mobile comprenant un serveur de gestion d'abonnement (SM) (incluant une unité de routage sécurisé (SR)), et comprenant une pluralité de terminaux abonnés équipés chacun d'un élément sécurisé, par exemple une carte sécurisée, de connexion comme définie précédemment pour envoyer des notifications au serveur de gestion d'abonnement en utilisant un identifiant d'adresse, par exemple un numéro court, propre à un opérateur de téléphonie mobile.

Les inventeurs ont eu l'idée d'utiliser des identifiants d'adresse, par exemple les numéros courts (ou « *short codes* »), pour s'affranchir des contraintes liées à la mise à jour d'une nouvelle adresse de serveur SM-SR et à la possibilité d'identifier les notifications selon les opérateurs auprès desquels les abonnés ont souscrits, afin de permettre des traitements spécifiques de ces notifications.

Grâce à de tels identifiants ou numéros courts, chaque opérateur peut gérer (par exemple identifier, filtrer, traiter, etc.) aisément les notifications émises par ses propres abonnés car il reçoit ces notifications sur des équipements (par exemple SMS-C) qui lui sont propres (grâce à l'identifiant ou au numéro court).

D'autres caractéristiques de l'élément sécurisé, du système et du procédé selon des modes de réalisation sont décrites dans les revendications dépendantes, essentiellement à l'aide d'une terminologie de dispositif, transposable par conséquent au procédé. En outre, ces caractéristiques sont principalement décrites en lien avec une carte sécurisée et un ou plusieurs numéros courts. Bien entendu, ces caractéristiques sont également applicables à d'autres types d'éléments sécurisés et d'autres identifiants d'adresse. En effet, l'identifiant d'adresse peut comprendre un numéro court unique à un opérateur de téléphonie mobile (MNO) ou une adresse IP propre à l'opérateur ou encore une adresse URL propre à l'opérateur.

Dans un mode de réalisation, la carte sécurisée comprend au moins deux numéros courts associés chacun à un profil d'abonné distinct, chaque numéro court permettant d'envoyer une notification au serveur de gestion d'abonnement (SM-SR) lorsque le profil d'abonné associé est en cours d'utilisation. Ainsi, chaque opérateur mobile (via son ou ses profils d'abonné) dispose de son propre numéro court d'accès au serveur SM-SR.

En particulier, les deux numéros courts peuvent désigner (c'est-à-dire définir ou identifier l'adresse) le même serveur SM-SR accessible par deux ou plus profils d'abonné, chacun selon un chemin différent de notification empruntant un serveur particulier de service de minimessages (via un premier SMS-C ou un deuxième SMS-C).

Dans un mode de réalisation particulier, la carte sécurisée comprend, en mémoire locale, une table de correspondances permettant l'association entre chaque numéro court et chaque profil d'abonné. Cette table de correspondances ou éventuellement table de routage facilite, d'une part, la récupération des numéros courts en minimisant la consultation des profils et leur modification (pour inclure un tel numéro), et d'autre part, la mise à jour des numéros courts désignant le serveur SM-SR en évitant de modifier directement les profils d'abonnés.

Selon une caractéristique particulière, la table de correspondances mémorise chaque numéro court en association avec un identifiant de numéro court ou « index », lequel index est stocké dans un profil d'abonné correspondant.

En variante, la table de correspondances mémorise chaque numéro court en association avec un identifiant de profil d'abonné. Cette variante minimise les modifications à apporter aux profils tels que définis dans la norme actuelle.

Dans une variante à la table de correspondances, chaque numéro court est mémorisé dans le profil d'abonné associé. Cette disposition réduit l'occupation de la mémoire de la carte sécurisée.

Dans un autre mode de réalisation, la carte sécurisée comprend, en outre, un numéro de téléphone international unique du serveur distant de gestion d'abonnement (SM-SR), ladite carte sécurisée étant configurée pour récupérer, de la mémoire locale, ledit numéro de téléphone international unique lorsque aucun numéro court n'est associé à un profil d'abonné en cours d'utilisation et pour envoyer, à l'aide dudit numéro de téléphone international unique récupéré, une notification d'état de carte au serveur distant de gestion d'abonnement (SM-SR). Cette disposition définit la cohabitation du numéro de téléphone international unique classiquement utilisé avec les numéros courts prévus selon l'invention. Elle garantit ainsi que le fonctionnement classique de notification du serveur SM-SR est *a minima* utilisé lorsque aucun numéro court n'est disponible pour le profil d'abonné en cours d'utilisation, notamment lorsque l'opérateur mobile associé n'en a pas défini.

Dans un autre mode de réalisation, la carte sécurisée est configurée pour :
recevoir, du serveur distant de gestion d'abonnement (SM-SR), une commande de mise à jour, dans la mémoire locale de la carte sécurisée, d'une adresse du serveur distant, la commande de mise à jour incluant un numéro de téléphone international unique du serveur distant et/ou au moins un numéro court associé à un profil d'abonné et désignant le serveur distant, et
mettre à jour (c'est-à-dire mémoriser si aucune information n'est déjà mémorisée), dans la mémoire locale de la carte sécurisée et en réponse à la commande de mise à jour, le numéro de téléphone international unique du serveur distant et/ou l'au moins un numéro court en association avec un profil d'abonné tel qu'indiqué dans la commande de mise à jour, de sorte à notifier le serveur de gestion d'abonnement à l'aide des numéros mis à jour.

Il est à noter que les numéros courts sont généralement uniques à l'intérieur du réseau mobile d'un même opérateur (MNO), parfois à l'intérieur d'un même pays, mais rarement dans le monde entier. De tels numéros courts valables dans plusieurs pays sont notamment disponibles à des prix prohibitifs. Il en résulte qu'un même serveur SM-SR auquel dépendent plusieurs opérateurs mobiles est associé, selon l'invention, à une pluralité de numéros courts, chacun correspondant à un opérateur mobile différent. Or la norme GSMA 12FAST.15 susvisée ne permet de pas de répondre à une telle situation, car l'adresse du serveur SM-SR se doit d'être unique.

Dans ce contexte, il est prévu, selon un mode de réalisation particulier, que la commande de mise à jour est similaire à la commande « *UpdateSMSRAdressingParameters* » définie à la section 4.1.1.10 de la norme GSMA 12FAST.15, augmentée d'au moins un double-champ associant un numéro court à un identifiant de profil d'abonné. Notamment le double-champ peut être réitéré une pluralité de fois dans la commande afin de définir une pluralité de numéros courts pour une pluralité correspondante de profils d'abonnés.

Dans un mode de réalisation, le système d'infrastructure comprend en outre un serveur de service de minimessages (SMS-C) propre à un opérateur de téléphonie mobile, le serveur de service de minimessages comprenant, en mémoire locale, une table de correspondances entre un numéro court qui est unique audit opérateur de téléphonie mobile et une adresse IP du serveur distant de gestion d'abonnement (SM-SR). Le serveur SMS-C est utilisé lorsque les notifications d'état sont envoyées par la carte sécurisée sous forme de messages SMS. La table de correspondances prévue dans ce serveur permet alors à l'opérateur de router efficacement ces messages vers le serveur SM-SR. En effet, généralement les serveurs SMS-C et SM-SR communiquent par voie IP, contrairement aux équipements en amont du serveur SMS-C.

Dans un mode de réalisation particulier, le système d'infrastructure comprend une pluralité de serveurs de service de minimessages (SMS-C) associés à une pluralité d'opérateurs respectifs de téléphonie mobile, les serveurs de service de minimessages comprenant chacun, en mémoire locale, une table de correspondance entre un numéro court qui est unique à l'opérateur associé et le même serveur distant de gestion d'abonnement (SM-SR). Ainsi les opérateurs de téléphonie mobile peuvent partager les coûts d'un même serveur SM-SR tout en ayant une grande liberté de traitement des notifications d'état émises par leurs abonnés. En effet, grâce à l'utilisation des numéros courts, les messages émis sont reçus par un serveur SMS-C propre à l'opérateur mobile d'appartenance. Ce dernier peut alors effectuer aisément tout traitement approprié sur les messages reçus.

Dans un mode de réalisation, le serveur distant de gestion d'abonnement (SM-SR) est configurée pour envoyer une commande de mise à jour d'une adresse du serveur distant, la commande de mise à jour incluant un numéro de téléphone international unique du serveur distant et/ou au moins un numéro court associé à un profil d'abonné et désignant le serveur distant, de sorte à mettre à jour, en mémoire des cartes sécurisées, le numéro de téléphone international unique du serveur distant et/ou l'au moins un numéro court en association avec un profil d'abonné tel qu'indiqué dans la commande de mise à jour. La commande de mise à jour peut être comme définie ci-dessus, notamment à partir de la commande « *UpdateSMSRAdressingParameters* » définie à la section 4.1.1.10 de la norme GSMA 12FAST.15.

Les avantages, buts et caractéristiques particulières de ce dispositif, de ce programme d'ordinateur et de ce support d'information étant similaires à ceux du procédé objet de la présente invention, ils ne sont pas repris ici.

### BREVE DESCRIPTION DES FIGURES

D'autres avantages, buts et caractéristiques particulières de la présente invention ressortiront de la description qui va suivre faite, dans un but explicatif et nullement limitatif, en regard des dessins annexés, dans lesquels :
la **figure 1** illustre, de manière simplifiée, un exemple de réseau de téléphonie mobile dans lequel des modes de réalisation de la présente invention peuvent être mis en oeuvre ;
la **figure 2** illustre un exemple d'architecture matérielle pour le ou les équipements constitutifs du système 1 décrit en référence à la **figure 1** ; et
la **figure 3** illustre une mise en oeuvre de l'invention pour la configuration de cartes eUICC d'abonnés et la communication de notifications depuis ces cartes vers le serveur SM-SR de la **figure 1**.

### DESCRIPTION DETAILLEE DE L'INVENTION

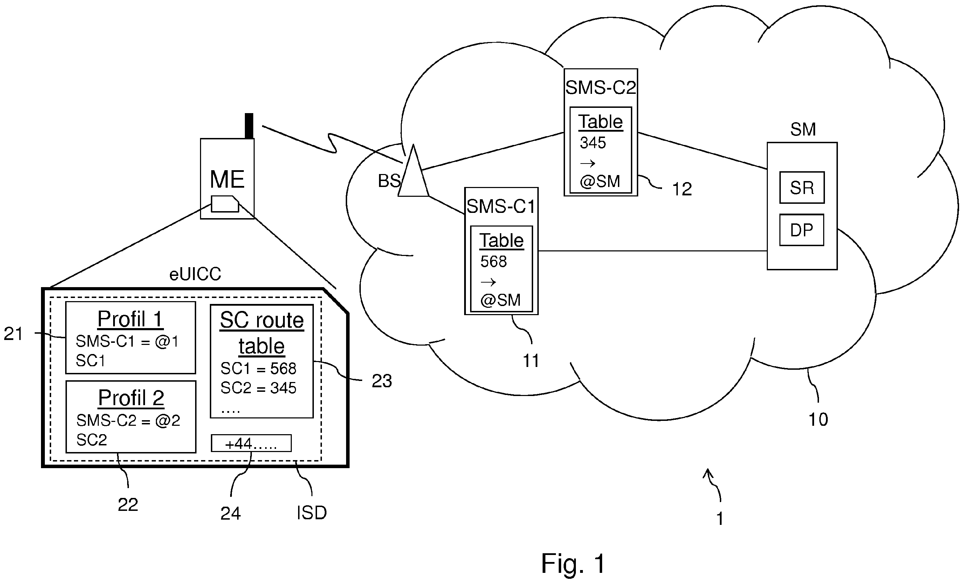

La **Figure 1** illustre, de manière simplifiée, un exemple de réseau de téléphonie mobile dans lequel des modes de réalisation de la présente invention peuvent être mis en oeuvre. Dans cette représentation schématique, seul un terminal mobile ME embarquant une carte sécurisée eUICC est représenté. Bien entendu, un réseau de téléphonie mobile inclut généralement une pluralité de tels terminaux mobiles équipés de cartes eUICC (ou SIM, USIM). La présente description s'intéresse aux cartes eUICC à titre d'exemple. D'une façon générale, la présente invention peut être mise en oeuvre dans tout type d'élément sécurisé (*Secure Element* selon la norme susvisée), par exemple des éléments sécurisés embarqués, ou eSE.

Le système 1 représenté comprend donc un terminal mobile ME classique, c'est-à-dire disposant de moyen de communication sur le réseau mobile et embarquant une carte sécurisée d'abonné, type eUICC. La présente invention met en oeuvre des opérations particulières dans la carte sécurisée eUICC.

Le système 1 comprend également un réseau mobile 10 comprenant de façon classique des stations de base BS pour connecter les terminaux mobiles ME, une pluralité d'entités (type passerelle GMSC, serveurs HLR, MSC, VLR, etc. non représentées) incluant des serveurs de service de minimessages SMS-C1 et SMS-C2 et un serveur de gestion d'abonnement SM doté d'une unité de routage sécurisé SR et d'une unité de préparation de données DP.

Les deux serveurs SMS-C1 et SMS-C2 sont gérés par deux opérateurs de téléphonie mobile différents, respectivement MNO1 et MNO2. Bien entendu, la présente invention s'applique lorsque le système 1 comprend un plus grand nombre de serveurs de service de minimessages, gérés par deux opérateurs ou plus.

De même, le serveur SM-SR est, dans cet exemple, partagé entre les deux opérateurs MNO1 et MNO2 afin de réduire les coûts d'installation, de déploiement, de fonctionnement et de maintenance. Bien entendu, d'autres serveurs SM-SR peuvent être prévus, lesquels sont partagés entre plusieurs opérateurs MNO.

Comme montré sur la figure et connu de la norme GlobalPlatform, la carte sécurisée eUICC comprend, en mémoire, un domaine de sécurité d'émetteur (en l'espèce un opérateur MNO) gérant une pluralité de profils d'abonnés 21, 22, une table de correspondances 23 et une adresse universelle 24 du serveur SM-SR, notamment un numéro de téléphone international unique de ce serveur.

Les profils d'abonnés peuvent être des profils d'opérateurs différents (par exemple MNO1 et MNO2) donnant accès à leurs infrastructures correspondantes, ou des profils donnant accès à des infrastructures différentes d'un même opérateur MNO (par exemple l'infrastructure 3G et l'infrastructure 4G). De façon connue, un seul profil est actif à la fois, c'est-à-dire en cours d'utilisation. La sélection d'un profil ou le basculement d'un profil à l'autre peut être déclenché de façon automatique, de façon contrôlée par les opérateurs MNO à l'aide de messages de service, ou encore de façon manuelle par l'utilisateur (en changeant par exemple d'opérateur ou de technologie, 3G ou 4G).

Outre les informations classiquement mémorisées dans un profil (voir la norme GSMA 12FAST.15), chaque profil 21, 22 mémorise l'adresse d'un serveur SMS-C correspondant (dans l'exemple les deux profils mémorisent les adresses @1 et @2 respectivement de SMS-C1 et SMS-C2) et stocke un index, SC1 pour le profil 21 et SC2 pour le profil 22.

La table de correspondances 23 associe, quant à elle, chaque index ici utilisé à un identifiant d'adresse. Cet identifiant d'adresse peut comprendre ou être constitué d'un numéro court effectif unique à un opérateur de téléphonie mobile. De façon connue, un numéro court est un numéro de téléphone spécial de taille substantiellement plus courte que les numéros de téléphones traditionnels. Classiquement, un numéro court comprend entre 4 et 8 chiffres.

Dans l'exemple, l'index SC1 est associé au numéro court 568, alors que l'index SC2 est associé au numéro court 345. En variante, l'identifiant d'adresse peut être constitué d'une adresse IP propre à l'opérateur, formée typiquement de 15 caractères maximum (par exemple SC1 = 78.123.2.23). Dans une autre variante, l'identifiant d'adresse peut être constituée d'une adresse URL propre à l'opérateur, par exemple formée de 256 caractères maximum (par exemple SC1 = www.smsr1.com).

Ainsi, la table de correspondances 23 permet d'associer chaque identifiant d'adresse, par exemple chaque numéro court, avec un profil d'abonné.

Dans la suite de la description, il est fait principalement référence aux numéros courts pour simplification des explications. Bien entendu, l'invention s'applique à tout type d'identifiant d'adresse formé à l'aide de caractères alphanumériques incluant des caractères spéciaux. Ainsi, selon le cas on utilise par exemple SC1 = 568 ou SC1 = 78.123.2.23 ou SC1 = www.smsr1.com.

Dans le mode de réalisation de la figure, la carte eUICC mémorise ainsi plusieurs numéros identifiant le serveur SM-SR et lui permettant d'envoyer des notifications d'état de la carte.

Pour ce faire, la carte est apte à récupérer, de la mémoire locale, un des numéros courts, celui qui est associé au profil d'abonné en cours d'utilisation si ce numéro court existe. Autrement, la carte récupère de façon classique l'adresse universelle 24 correspondant au serveur SM-SR.

Puis, à l'aide dudit numéro court ou du numéro de téléphone international unique récupéré, la carte envoie une notification d'état de carte au serveur SM-SR.

Comme il ressortira des exemples ci-après, cette notification peut prendre la forme d'un message SMS transmis au serveur SMS-C correspondant au profil actif (c'est-à-dire au serveur SMS-C indiqué dans ledit profil actif).

Comme illustré sur la figure, chaque serveur SMS-C comprend, en mémoire, une table de correspondances (11, 12) entre un numéro court (ou tout identifiant d'adresse) qui est unique à l'opérateur associé au serveur SMS-C considéré (MNO1 pour SMS-C1 et MNO2 pour SMS-C2) et le même serveur SM-SR, notamment une adresse IP (Internet Protocol) de ce serveur SM-SR.

Le serveur SMS-C qui reçoit un message SMS de la carte eUICC, lequel message comprend les données d'état à transmettre ainsi que le numéro court désignant le serveur SM-SR, convertit ainsi le message reçu en un message IP à destination de l'adresse du serveur SM-SR telle que associée au numéro court reçu dans la table 11 ou 12. Il est à noter que dans le cas où l'identifiant d'adresse est une adresse IP, celle-ci peut être directement l'adresse IP du serveur SM-SR ou être une adresse IP quelconque qui est associée, dans la table de correspondances, à l'adresse IP du serveur SM-SR.

Le serveur SM-SR traite de façon classique les messages (notifications) ainsi reçus.

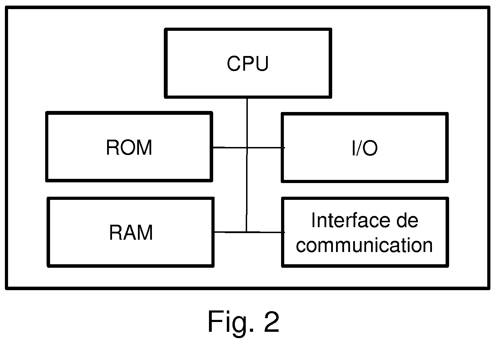

La **Figure 2** illustre un exemple d'architecture matérielle pour le ou les équipements constitutifs du système 1 décrit en référence à la **Figure 1**.

Dans cet exemple, l'équipement, élément sécurisé, carte eUICC, terminal ME, serveur SMS-C ou SM-SR, comprend un bus de communication auquel sont reliés :
- une unité de traitement -ou microprocesseur- notée CPU (sigle de *Central Processing Unit* en terminologie anglo-saxonne) ;
- une ou plusieurs mémoires non volatile par exemple ROM (acronyme de *Read Only Memory* en terminologie anglo-saxonne) pouvant constituer un support au sens de l'invention, c'est-à-dire pouvant comprendre un programme informatique comprenant des instructions pour la mise en oeuvre d'un procédé selon un mode de réalisation de l'invention ; cette mémoire non volatile peut également être une mémoire EEPROM (acronyme de *Electrically Erasable Read Only Memory* en terminologie anglo-saxonne) ou encore une mémoire Flash ;
- une mémoire vive ou mémoire cache ou mémoire volatile par exemple RAM (acronyme de *Random Access Memory* en terminologie anglo-saxonne) comprenant des registres adaptés à l'enregistrement des variables et paramètres créés et modifiés au cours de l'exécution du programme précité ; lors de la mise en oeuvre de l'invention, les codes d'instructions du programme stocké en mémoire morte ROM sont chargés en mémoire RAM en vue d'être exécutés par l'unité de traitement CPU ;
- une interface de communication adaptée à transmettre et à recevoir des données, par exemple via un réseau de télécommunications ou une interface de lecture/écriture d'un élément sécurisé ;
- une interface d'entrées/sorties I/O (pour *Input*/*Output* en terminologie anglo-saxonne), par exemple un écran, un clavier, une souris ou un autre dispositif de pointage tel qu'un écran tactile ou une télécommande ; cette interface I/O permet à l'utilisateur d'interagir avec le système au cours de la mise en oeuvre du procédé via une interface graphique.

Le bus de communication permet la communication et l'interopérabilité entre les différents éléments inclus dans l'équipement ou reliés à lui. La représentation du bus n'est pas limitative et, notamment, l'unité de traitement est susceptible de communiquer des instructions à tout élément de l'équipement directement ou par l'intermédiaire d'un autre élément de cet équipement.

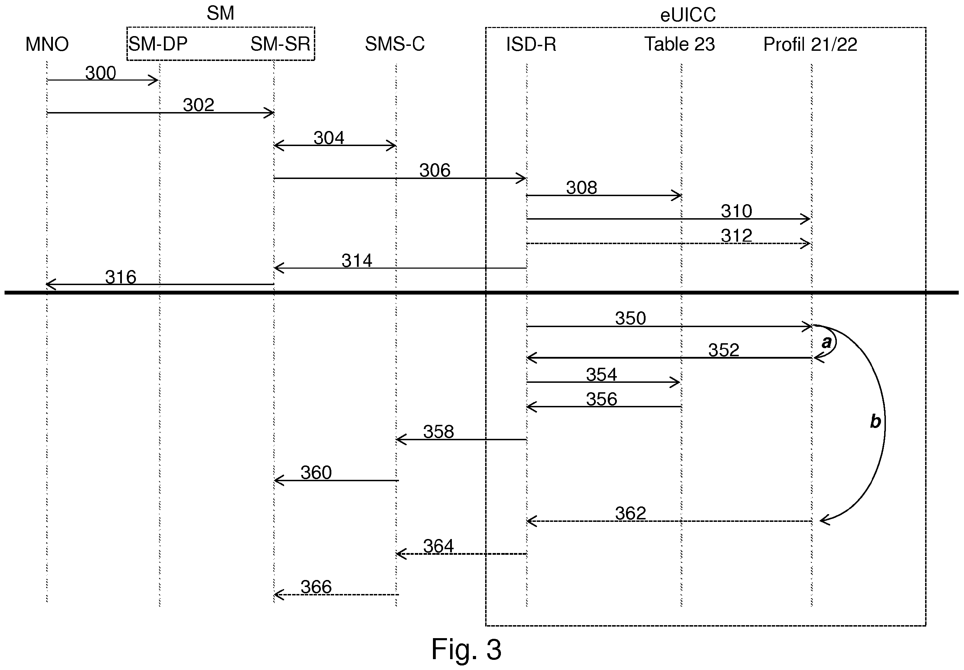

La **Figure 3** illustre une mise en oeuvre de l'invention pour la configuration des cartes eUICC des abonnés et la communication de notifications depuis ces cartes vers le serveur SM-SR. Les entités de l'eUICC sont représentées dans la partie de droite de la figure, à l'intérieur d'un cadre en pointillés surmonté des lettres « eUICC ». Les éléments repris dans la partie gauche de la figure concernent les éléments du réseau mobile 10.

La première phase de configuration ou de mise à jour des cartes eUICC, ou plus généralement de tout élément sécurisé selon l'invention, est illustrée par la partie supérieure de la figure (au-dessus du trait épais). Elle permet de mémoriser les numéros courts, ou plus généralement les identifiants d'adresse, dans les cartes eUICC en association avec des profils d'abonnés.

Aux étapes 300 et 302, un opérateur mobile MNO ajoute des informations relatives aux numéros courts SC auprès des unités DP (de préparation de données) et SR (de routage sécurisé) du serveur de gestion d'abonnement SM.

A l'étape 300, il envoie une commande Add(*SC, profile type*) à l'unité DP du serveur SM (soit SM-DP) de sorte à associer le numéro court SC, ou plus généralement l'identifiant d'adresse SC , au(x) profil(s) identifiés par le « profile type ». Par exemple le nouveau numéro court SC est associé au(x) profil(s) relevant de la technologie 4G. L'unité SM-DP est en charge de la création et du maintien des différents profils créés par le ou les opérateurs partageant le serveur SM.

A l'étape 302, il envoie (étape 306) une commande Add(*SC*, *SMS-C*) à l'unité SR du serveur SM (soit SM-SR) qui tient à jour l'ensemble des informations d'adressage et de routage dans la réseau. Ainsi, l'unité SM-SR peut diffuser (synchronisation entre les serveurs lors de l'étape 304) le nouveau numéro court SC auprès du serveur SMS-C idoine, afin que ce dernier l'associe avec l'adresse IP du serveur SM (ou de l'unité SM-SR émettrice du message permettant cette diffusion).

De la sorte, tous les nouveaux numéros courts créés par un opérateur MNO sont connus du serveur SM et sont diffusés auprès des différents serveurs du réseau 10.

Puis, afin de diffuser ces nouveaux numéros courts auprès des cartes eUICC des abonnés, l'unité SM-SR envoie une commande de mise à jour d'une adresse de l'unité de routage sécurisé, en l'espèce d'un nouveau numéro court.

La commande de mise à jour inclut un numéro de téléphone international unique de l'unité de routage sécurisé dans le cas classique de la commande « *UpdateSMSRAdressingParameters* » définie à la section 4.1.1.10 de la norme GSMA 12FAST.15 (voir le champ « *SMS parameter Value* » dans l'exemple ci-dessous).

La commande peut également comprendre (éventuellement la section relative au numéro de téléphone international unique peut être vide si ce numéro demeure inchangé) au moins un numéro court associé à un profil d'abonné et désignant l'unité de routage sécurisé.

Cette commande peut être réalisée à partir de la commande « *UpdateSMSRAdressingParameters* » susvisée dans laquelle on ajoute au moins un double-champ associant un numéro court, ou plus généralement un identifiant d'adresse SC, à un identifiant de profil d'abonné. Bien entendu, on répète le double-champ autant de fois que nécessaire pour définir l'ensemble des associations {numéro court-identifiant de profil} qu'il est nécessaire de diffuser auprès des cartes eUICC.

Dans un mode de réalisation, la commande « *UpdateSMSRAdressingParameters* » définie à la section 4.1.1.10 de la norme GSMA 12FAST.15 est modifiée comme suit (les champs en gras soulignés sont ajoutés par rapport à la norme) :

| **Code** | **Valeur** | **Signification** | **Présence** |
|---|---|---|---|
| DGI | 'DF6D' | DGI propritaire pour la carte | Obligatoire |
| Length | xx | Longueur des données qui suivent | Obligatoire |
| Command | 10 | Commande de mise à jour des paramètres d'adresse SM-SR | Obligatoire |
| SMS Parameter Tag | 'A3 | Drapeau des paramètres SMS | Conditionnelle |
| SMS Parameter Length | X | Longueur des paramètres SMS | Conditionnelle |
| SMS parameter Value | xx...xx | Adresse de destination du SM-SR | Conditionnelle |
| CAT-TP Parameter Tag | 'A4' | Drapeau du paramètre CAT_TP | Conditionnelle |
| CAT-TP Parameter Length | Y | Longueur des paramètres CAT_TP | Conditionnelle |
| CAT-TP Parameter Value | xx...xx | Valeur des paramètres de lien CAT_TP | Conditionnelle |
| **SC Parameter Tag** | 'E3' | Drapeau du paramètre SC | Conditionnelle |
| **SC Parameter Length** | X +Y +4 | Longueur des paramètres SC | Conditionnelle |
| **SC Value Tag** | 91 | Drapeau du SC | Conditionnelle |
| **SC Value Length** | X | Longueur du SC | Conditionnelle |
| **SC Value value** | xx ..xx | Valeur du SC | Conditionnelle |
| **Profile ID Tag** | "01" | Drapeau du profil | Conditionnelle |
| **Profile ID Length** | Y | Longueur de l'identifiant de profil | Conditionnelle |
| **Profile ID Length** | xx ..xx | Valeur de l'identifiant de profil | Conditionnelle |

### Commande « UpdateSMSRAdressingParameters » modifiée selon un mode de réalisation de l'invention

Les champs « *SC Value Length* » et « SC *Value value* » permettent de gérer les numéros courts qui sont de taille variable d'un pays à l'autre, ou plus généralement les identifiants d'adresse dont le nombre de caractères peut fluctuer.

A réception d'une telle commande, chaque carte eUICC peut ainsi mettre à jour (c'est-à-dire mémoriser si aucune information n'est déjà mémorisée), dans sa mémoire locale et en réponse à la commande de mise à jour, le numéro de téléphone international unique de l'unité de routage sécurisé et/ou l'au moins un numéro court en association avec un profil d'abonné tel qu'indiqué dans la commande de mise à jour. De la sorte, la carte eUICC pourra notifier l'unité de routage sécurisé du serveur de gestion d'abonnement à l'aide des numéros mis à jour.

Cette mise à jour effective est illustrée sur la figure par les étapes 308 et 310.

A l'étape 308, le domaine racine de sécurité émetteur (ISD-R) de la carte reçoit et exécute la commande de mise à jour. En effet, seul ce domaine ISD-R est connu du serveur SM, comme porte d'entrée dans la carte eUICC. Ainsi, l'unité SM-SR envoie la commande de mise à jour à l'ISD-R.

Toujours à l'étape 308, en réponse à l'exécution de cette commande, l'ISD-R envoie une commande pour mettre à jour la table de correspondances 23 avec le ou les nouveaux numéros courts indiqués dans la commande, par exemple à l'aide de la commande STORE dans laquelle les numéros courts sont passés en paramètres (avec soit un identifiant de profil, soit un index de SC).

Par exemple, il peut s'agit de stocker le numéro court '345', auquel la table de correspondances associe l'index SC2 (premier index disponible par exemple).

A l'étape 310, dans le cas où la table de correspondances 23 associe un index de SC à chaque nouveau numéro court, l'ISD-R lie les nouveaux numéros courts aux profils abonnés comme spécifié dans la commande reçue, en particulier aux profils déjà existants. Par exemple, l'ISD-R peut modifier chaque profil d'abonné concerné pour mémoriser l'index de SC associé au numéro court correspondant (tel que mémorisé dans la table 23), et ce à l'aide d'une commande Link SC. Dans notre exemple, le profil 2 (22 sur la **figure 1**) est modifié pour mémoriser l'index SC2.

A noter que si un numéro court avait déjà été fourni pour un profil donné, la commande indiquant un nouveau numéro court pour le même profil conduit à la suppression et au remplacement de l'ancien numéro court, au profit du nouveau.

A noter que dans une variante de l'invention n'utilisant pas de table de correspondances 23, chaque numéro court, ou plus généralement chaque identifiant d'adresse, est mémorisé dans le profil d'abonné associé. Pour ce faire, l'ISD-R génère une commande modifiant directement le profil, par exemple STORE SC dans le profil (étape 312).

Une fois la carte eUICC configurée, l'ISD-R envoie un acquittement au SM-SR (étape 314) qui a son tour informe l'opérateur MNO (étape 316).

Ultérieurement, la carte eUICC, ou plus généralement l'élément sécurisé, souhaite envoyer une notification au serveur SM-SR. C'est ce qui est décrit ci-après à partir de l'étape 350, dans un mode de réalisation de l'invention. A ce moment, la carte eUICC est attachée à un réseau de téléphonie mobile à l'aide d'un des profils disponibles sur la carte (ce profil étant alors actif, c'est-à-dire en cours d'utilisation, et indiqué comme « enabled » dans les registres de l'ISD-R). A titre d'exemple, le profil actif est le profil 2 (22 sur la **figure 1**).

Plusieurs événements déclencheurs peuvent survenir aux fins de déclencher l'étape 350.

Il s'agit principalement d'événements internes à la carte eUICC tels qu'un attachement à un réseau mobile, un changement de localisation (par exemple de cellule radio), une première activation de la carte d'abonné, une erreur (par exemple une connexion au réseau impossible) conduisant à basculer vers un profil par défaut ou « de repli ».

Bien entendu des événements relatifs aux outils SIM Toolkit peuvent être pris en compte, par exemple des événements issus de l'utilisateur interagissant avec des interfaces SIM Toolkit (menus).

En variante, un tel événement pourrait être la réception d'une commande particulière du serveur SM-SR.

A détection dudit événement déclencheur, l'ISD-R émet une commande pour récupérer une adresse du serveur SM-SR. C'est l'étape 350 au cours de laquelle l'ISD-R émet par exemple la commande GET pour récupérer, dans le profil actif, l'index d'un numéro court, ou plus généralement d'un identifiant d'adresse, associé au profil d'abonné actif, si un tel numéro existe (cas ***a*** de la figure). On privilégie ainsi l'utilisation du numéro court plutôt que celle du numéro de téléphone international unique 24.

En réponse à cette commande, l'index de SC est récupéré au cours de l'étape 352. Dans l'exemple pris, l'index 'SC2' est récupéré car le profil 2 est actif.

Au cours de ces étapes 350 et 352, l'ISD-R récupère également l'adresse du serveur SMS-C associé au profil actif, l'adresse @2 du SMS-C2 dans notre exemple.

L'ISD-R récupère alors le numéro court associé à cet index dans la table de correspondances 23 : commande GET SC au cours de l'étape 354 et réponse à l'étape 356. Dans l'exemple de la **figure 1**, l'index 'SC2' permet de récupérer le numéro court '345'.

A noter que lorsque la table de correspondances 23 associe directement le numéro court du SM-SR à un identifiant de profil d'abonné, les étapes 350 à 356 peuvent consister à récupérer l'adresse du serveur SMS-C au niveau du profil actif, et à récupérer un numéro court associé à l'identifiant de profil actif (connu de l'ISD-R) uniquement au niveau de la table de correspondances 23.

Ayant connaissance du numéro court (s'il y en a un), l'ISD-R prépare et envoie un message de notification d'état de la carte à l'étape 358.

Ce message prend par exemple la forme d'un message SMS à destination du serveur SMS-C (dont l'adresse @1 ou @2 a été récupérée à l'étape 352), lequel message comprend :
- les données d'état de la carte eUICC ; et
- l'adresse du serveur SM-SR, soit le numéro court récupéré '345', en particulier indiquée dans le champ TP-DA (Destination Address) de la notification par SMS.

A titre d'exemple, la norme GSMA susvisé définit différents types de notifications :
- valeur 01' en cas de premier attachement au réseau ;
- valeur '02' en cas de profil changé avec succès ;
- valeur '03' en cas d'échec de changement de profil et retour en arrière (Rollback) ;
- valeur '04' en cas d'échec de changement de profil et basculement dans un profil de repli (Fallback) ;
- valeur '05' en cas de changement de profil après repli local vers un profil de repli (Fallback).

Ce message de notification est reçu par le serveur SMS-C (SMS-C2 dans l'exemple) qui (1) détermine dans sa table locale 11/12 l'adresse IP de serveur SM-SR correspondant au numéro court indiqué dans le SMS reçu (par exemple l'adresse IP 78.123.2.23 associée à '345' dans cette table), et (2) retransmet les données d'état (notification) au serveur SM-SR sous forme de message IP à l'adresse IP obtenue 78.123.2.23. Il s'agit de l'étape 360.

Les étapes 362 à 366 illustrent la situation où aucun numéro court n'est associé au profil d'abonné actif (cas ***b*** de la figure). Dans ce cas, en réponse à la commande 350, seul le numéro de téléphone international unique 24 est retourné à l'ISD-R. Ce numéro est précisé dans le message SMS transmis à l'étape 364 (similaire à l'étape 358) permettant au serveur SMS-C de déterminer l'adresse IP du serveur SM-SR pour retransmettre les données d'état (notification) sous forme de paquets IP (étape 366).

Les exemples qui précèdent ne sont que des modes de réalisation de l'invention qui ne s'y limite pas et est définie par les revendications.

## Revendications

1. Elément sécurisé de connexion à un réseau de téléphonie mobile (10), comprenant, en mémoire locale, deux numéros courts désignant le même serveur distant de gestion d'abonnement dans une infrastructure de téléphonie mobile pour deux opérateurs de téléphonie mobile respectifs, chaque numéro court étant propre à un des opérateurs de téléphonie mobile et étant associé à un profil différent d'abonné (21, 22) à l'opérateur au sein de l'élément sécurisé, et ledit élément sécurisé est configuré pour récupérer, de la mémoire locale, le numéro court associé au profil d'abonné en cours d'utilisation et pour envoyer un message SMS audit numéro court récupéré, ledit message SMS incluant une notification d'état d'élément sécurisé, permettant de la sorte la transmission de ladite notification d'état au serveur distant de gestion d'abonnement via un serveur de service de minimessages SMS-C propre à l'opérateur de téléphone mobile associé au numéro court récupéré.

2. Elément sécurisé selon la revendication 1, comprenant, en mémoire locale, une table de correspondances (23) permettant l'association entre chaque numéro court et chaque profil d'abonné.

3. Elément sécurisé selon la revendication 2, dans lequel la table de correspondances (23) mémorise chaque numéro court en association avec un identifiant de profil d'abonné.

4. Elément sécurisé selon la revendication 1, dans laquelle chaque numéro court est mémorisé dans le profil d'abonné associé.

5. Elément sécurisé selon l'une quelconque des revendications 1 à 4, comprenant, en outre, un numéro de téléphone international unique (24) du serveur distant de gestion d'abonnement, ledit élément sécurisé étant configuré pour récupérer, de la mémoire locale, ledit numéro de téléphone international unique lorsque aucun numéro court n'est associé à un profil d'abonné en cours d'utilisation et pour envoyer, à l'aide dudit numéro de téléphone international unique récupéré, une notification d'état d'élément sécurisé au serveur distant de gestion d'abonnement.

6. Elément sécurisé selon l'une quelconque des revendications 1 à 5, configurée pour :
recevoir, du serveur distant de gestion d'abonnement, une commande de mise à jour, dans la mémoire locale de l'élément sécurisé, d'une adresse du serveur distant, la commande de mise à jour incluant un numéro de téléphone international unique (24) de l'unité de routage sécurisé et/ou au moins un numéro court associé à un profil d'abonné (21, 22) et désignant le serveur distant, et
mettre à jour, dans la mémoire locale de l'élément sécurisé et en réponse à la commande de mise à jour, le numéro de téléphone international unique du serveur distant et/ou l'au moins un numéro court en association avec un profil d'abonné tel qu'indiqué dans la commande de mise à jour, de sorte à notifier le serveur de gestion d'abonnement à l'aide des numéros mis à jour.

7. Procédé de communication dans un réseau de téléphonie mobile (10) exécuté par un élément sécurisé de connexion au réseau de téléphonie mobile, l'élément sécurisé comprenant, en mémoire locale, deux numéros courts désignant le même serveur distant de gestion d'abonnement dans une infrastructure de téléphonie mobile pour deux opérateurs de téléphonie mobile respectifs, chaque numéro court étant propre à un des opérateurs de téléphonie mobile et étant associé à un profil différent d'abonné (21, 22) à l'opérateur, le procédé, comprenant, à réception d'un événement déclencheur de notification, les étapes suivantes :
récupérer (350, 352), de la mémoire locale, le numéro court associé au profil d'abonné en cours d'utilisation, et
envoyer (358) un message SMS audit numéro court récupéré, ledit message SMS incluant une notification d'état d'élément sécurisé, permettant de la sorte la transmission de ladite notification d'état au serveur distant de gestion d'abonnement via un serveur de service de minimessages SMS-C propre à l'opérateur de téléphone mobile associé au numéro court récupéré.

8. Procédé selon la revendication 7, dans lequel l'élément sécurisé
reçoit (306), du serveur distant de gestion d'abonnement, une commande de mise à jour, d'une adresse du serveur distant, la commande de mise à jour incluant un numéro de téléphone international unique (24) du serveur distant et/ou au moins un numéro court associé à un profil d'abonné (21, 22) et désignant le serveur distant, et
met à jour (308, 310, 312), dans sa mémoire locale en réponse à la commande de mise à jour, le numéro de téléphone international unique du serveur distant et/ou l'au moins un numéro court en association avec un profil d'abonné tel qu'indiqué dans la commande de mise à jour, de sorte à notifier le serveur de gestion d'abonnement à l'aide des numéros mis à jour.

9. Système d'infrastructure de réseau de téléphonie mobile comprenant un serveur de gestion d'abonnement, et comprenant une pluralité de terminaux abonnés équipés chacun d'un élément sécurisé de connexion selon l'une quelconque des revendications 1 à 6 pour envoyer des notifications au serveur de gestion d'abonnement en utilisant un numéro court, le numéro court étant propre à un opérateur de téléphonie mobile.

10. Système selon la revendication 9, dans lequel le serveur distant de gestion d'abonnement est configurée pour envoyer une commande de mise à jour d'une adresse du serveur distant, la commande de mise à jour incluant un numéro de téléphone international unique du serveur distant et/ou au moins un numéro court associé à un profil d'abonné et désignant le serveur distant, de sorte à mettre à jour, en mémoire des éléments sécurisés, le numéro de téléphone international unique du serveur distant et/ou l'au moins un numéro court en association avec un profil d'abonné tel qu'indiqué dans la commande de mise à jour.

11. Système selon la revendication 9 ou 10, comprenant en outre deux serveurs de service de minimessages SMS-C propres aux deux opérateurs de téléphonie mobile respectivement, chaque serveur de service de minimessages comprenant, en mémoire locale, une table de correspondances (11, 12) entre un numéro court propre audit opérateur de téléphonie mobile et une adresse IP du même serveur distant de gestion d'abonnement.

## Patentansprüche

1. Gesichertes Element für den Anschluss an ein Mobiltelefonnetz (10), das in einem lokalen Speicher zwei kurze Nummern enthält, die denselben entfernten Teilnahmemanagement-Server in einer Mobiltelefoninfrastruktur für zwei entsprechende Mobiltelefonanbieter bezeichnen, wobei jede kurze Nummer zu einem der Mobiltelefonanbieter gehört und einem unterschiedlichen Teilnehmerprofil (21, 22) bei dem Anbieter innerhalb des gesicherten Elements zugeordnet ist, wobei das gesicherte Element konfiguriert ist, aus dem lokalen Speicher die dem Teilnehmerprofil zugeordnete kurze Nummer während der Verwendung wiederzugewinnen und eine SMS-Nachricht an die wiedergewonnene kurze Nummer zu senden, wobei die SMS-Nachricht eine Meldung über den Zustand des gesicherten Elements enthält, wodurch die Übertragung der Zustandsmeldung an den entfernten Teilnahmemanagement-Server über einen Kurznachrichtendienst-Server, SMS-C, der dem Mobiltelefonanbieter gehört, der der wiedergewonnenen Kurznachricht zugeordnet ist, ermöglicht wird.

2. Gesichertes Element nach Anspruch 1, das im lokalen Speicher eine Korrespondenztabelle (23) enthält, die die Zuordnung zwischen jeder kurzen Nummer und jedem Teilnehmerprofil ermöglicht.

3. Gesichertes Element nach Anspruch 2, wobei die Korrespondenztabelle (23) jede kurze Nummer in Zuordnung zu einer Kennung des Teilnehmerprofils speichert.

4. Gesichertes Element nach Anspruch 1, wobei jede kurze Nummer in dem zugeordneten Teilnehmerprofil gespeichert ist.

5. Gesichertes Element nach einem der Ansprüche 1 bis 4, das außerdem eine eindeutige internationale Telefonnummer (24) des entfernten Teilnahmemanagement-Servers enthält, wobei das gesicherte Element konfiguriert ist, aus dem lokalen Speicher die eindeutige internationale Telefonnummer wiederzugewinnen, wenn dem Teilnehmerprofil während der Verwendung keine kurze Nummer zugeordnet ist, und mit Hilfe der wiedergewonnenen eindeutigen internationalen Telefonnummer eine Zustandsmeldung des gesicherten Elements an den entfernten Teilnahmemanagement-Server zu senden.

6. Gesichertes Element nach einem der Ansprüche 1 bis 5, das konfiguriert ist zum:
Empfangen von dem entfernten Teilnahmemanagement-Server eines Befehls zum Aktualisieren einer Adresse des entfernten Servers in dem lokalen Speicher des gesicherten Elements, wobei der Aktualisierungsbefehl eine eindeutige internationale Telefonnummer (24) der gesicherten Router-Einheit und/oder wenigstens eine kurze Nummer, die einem Teilnehmerprofil (21, 22) zugeordnet ist und den entfernten Server bezeichnet, enthält, und
Aktualisieren in dem lokalen Speicher des gesicherten Elements und in Reaktion auf den Aktualisierungsbefehl der eindeutigen internationalen Telefonnummer von dem entfernten Server und/oder der wenigstens einen kurzen Nummer in Zuordnung zu einem Teilnehmerprofil, wie es in dem Aktualisierungsbefehl angegeben wird, derart, dass an den Teilnahmemanagement-Server mit Hilfe aktualisierter Nummern eine Meldung übermittelt wird.

7. Kommunikationsverfahren in einem Mobiltelefonnetz (10), das von einem gesicherten Element für den Anschluss an das Mobiltelefonnetz ausgeführt wird, wobei das gesicherte Element in einem lokalen Speicher zwei kurze Nummern enthält, die denselben entfernten Teilnahmemanagement-Server in einer Mobiltelefoninfrastruktur für zwei jeweilige Mobiltelefonanbieter bezeichnen, wobei jede kurze Nummer zu einem der Mobiltelefonanbieter gehört und einem unterschiedlichen Teilnehmerprofil (21, 22) bei dem Anbieter zugeordnet ist, wobei das Verfahren bei Empfang eines Meldeauslöseereignisses die folgenden Schritte umfasst:
Wiedergewinnen (350, 352) aus dem lokalen Speicher einer kurzen Nummer, die dem Teilnehmerprofil zugeordnet ist, während der Verwendung, und
Senden (358) einer SMS-Nachricht an die wiedergewonnene kurze Nummer, wobei die SMS-Nachricht eine Meldung über den Zustand des gesicherten Elements enthält, wodurch die Übertragung der Zustandsmeldung an den entfernten Teilnahmemanagement-Server über einen Kurznachrichtendienst-Server, SMS-C, der zu dem Mobiltelefonanbieter gehört, der der wiedergewonnenen kurzen Nummer zugeordnet ist, ermöglicht wird.

8. Verfahren nach Anspruch 7, wobei das gesicherte Element
von dem entfernten Teilnahmemanagement-Server einen Aktualisierungsbefehl für eine Adresse des entfernten Servers empfängt (306), wobei der Aktualisierungsbefehl eine eindeutige internationale Telefonnummer (24) des entfernten Servers und/oder wenigstens eine einem Teilnehmerprofil (21, 22) zugeordnete kurze Nummer, die den entfernten Server bezeichnet, enthält, und
in seinem lokalen Speicher in Reaktion auf den Aktualisierungsbefehl die eindeutige internationale Telefonnummer des entfernten Servers und/oder die wenigstens eine kurze Nummer, die einem Teilnehmerprofil zugeordnet ist, wie in dem Aktualisierungsbefehl angegeben, aktualisiert (308, 310, 312), derart, dass an den Teilnahmemanagement-Server mit Hilfe aktualisierter Nummern eine Meldung übermittelt wird.

9. Mobiltelefonnetz-Infrastruktursystem, das einen Teilnahmemanagement-Server enthält und mehrere Teilnehmerendgeräte enthält, die jeweils mit einem gesicherten Anschlusselement nach einem der Ansprüche 1 bis 6 ausgerüstet sind, um Meldungen an den Teilnahmemanagement-Server unter Verwendung einer kurzen Nummer zu senden, wobei die kurze Nummer einem Mobiltelefonanbieter gehört.

10. System nach Anspruch 9, wobei der entfernte Teilnahmemanagement-Server konfiguriert ist zum Senden eines Aktualisierungsbefehls für eine Adresse des entfernten Servers, wobei der Aktualisierungsbefehl eine eindeutige internationale Telefonnummer des entfernten Servers und/oder wenigstens eine kurze Nummer, die dem Teilnehmerprofil zugeordnet ist und den entfernten Server bezeichnet, enthält, derart, dass im Speicher der gesicherten Elemente die eindeutige internationale Telefonnummer des entfernten Servers und/oder die wenigstens eine kurze Nummer, die einem Teilnehmerprofil zugeordnet ist, wie in dem Aktualisierungsbefehl angegeben, aktualisiert werden.

11. System nach Anspruch 9 oder 10, das außerdem zwei Kurznachrichtendienst-Server, SMS-C, enthält, die zu den beiden jeweiligen Mobiltelefonanbietern gehören, wobei jeder Kurznachrichtendienst-Server im lokalen Speicher eine Korrespondenztabelle (11, 12) zwischen einer zu dem Mobiltelefonanbieter gehörenden kurzen Nummer und einer IP-Adresse desselben entfernten Teilnahmemanagement-Servers enthält.

## Claims

1. Secure element for connection to a mobile telephone network (10), comprising, in local memory, two short numbers denoting the same remote subscription management server in a mobile network infrastructure for two respective mobile network operators, each short number being specific to one of the mobile network operators and being associated with a different operator subscriber profile (21, 22) in the secure element, and said secure element is configured to recover from the local memory the short number associated with the subscriber profile being used and, to send an SMS message to said recovered short number, said SMS message including a secure element status notification, thus allowing transmission of said status notification to the remote subscription management server via a short message service SMS-C server specific to the mobile network operator associated with the recovered short number.

2. Secure element according to Claim 1, comprising, in local memory, a correspondence table (23) enabling association of each short number with each subscriber profile.

3. Secure element according to Claim 2, in which the correspondence table (23) memorises each short number in association with the subscriber profile identifier.

4. Secure element according to Claim 1, in which each short number is memorised in the associated subscriber profile.

5. Secure element according to any one of Claims 1 to 4, further comprising a unique international telephone number (24) of the remote subscription management server, said secure element being configured to recover said unique international telephone number from the local memory when no short number is associated with a subscriber profile being used and, using said recovered unique international telephone number, to send a secure element status notification to the remote subscription management server.

6. Secure element according to any one of Claims 1 to 5, configured:
to receive from the remote subscription management server a command to update an address of the remote server in the local memory of the secure element, the update command including a unique international telephone number (24) of the secure routing unit and/or at least one short number associated with a subscriber profile (21, 22) and designating the remote server, and
to update, in the local memory of the secure element and in response to the update command, the unique international telephone number of the remote server and/or the at least one short number in association with a subscriber profile as indicated in the update command, so as to notify the subscription management server using the updated numbers.

7. Method of communication in a mobile telephone network (10) executed by a secure element for connection to the mobile telephone network, the secure element comprising, in local memory, two short numbers denoting the same remote subscription management server in a mobile network infrastructure for two respective mobile network operators, each short number being specific to one of the mobile network operators and being associated with a different operator subscriber profile (21, 22), the method comprising, on reception of an event triggering notification, the following steps:
recovering (350, 352), from the local memory the short number associated with the subscriber profile being used, and
sending (358) an SMS message to said recovered short number, said SMS message including a secure element status notification, thus allowing transmission of said status notification to the remote subscription management server via a short message service SMS-C server specific to the mobile network operator associated with the recovered short number.

8. Method according to Claim 7, in which the secure element
receives (306) from the remote subscription management server a command to update an address of the remote server, the update command including an unique international telephone number (24) of the remote server and/or at least one short number associated with a subscriber profile (21, 22) and designating the remote server, and
updates (308, 310, 312), in its local memory and in response to the update command, the unique international telephone number of the remote server and/or the at least one short number in association with a subscriber profile as indicated in the update command, so as to notify the subscription management server using the updated numbers.

9. Mobile telephone network infrastructure system comprising a subscription management server and comprising a plurality of subscriber terminals each equipped with a secure connection element according to any one of Claims 1 to 6 for sending notifications to the subscription management server using a short number, the short number being specific to a mobile network operator.

10. System according to Claim 9, in which the remote subscription management server is configured to send a command to update an address of the remote server, the update command including a unique international telephone number of the remote server and/or at least one short number, associated with a subscriber profile and designating the remote server, so as to update, in the memory of the secure elements, the unique international telephone number of the remote server and/or the at least one short number in association with a subscription profile as indicated in the update command.

11. System according to Claim 9 to 10, further comprising two short message service SMS-C servers specific to the two mobile network operators, respectively, each short message service server comprising, in local memory, a table (11, 12) of correspondences between a short number that is specific to said mobile network operator and an IP address of the same remote subscription management server.
